# EUROPEAN PATENT SPECIFICATION

(11) **EP 1 961 557 B1**
(45) Date of publication and mention of the grant of the patent: **05.04.2017**
(21) Application number: 07003899.7
(22) Date of filing: 26.02.2007
(51) Int. Cl.: B32B 27/32

(54) **Multilayer film structure**
Mehrschichtige Filmstruktur
Structure de film multicouche

(43) Date of publication of application: 27.08.2008
(73) Proprietor: Borealis Technology Oy, 06201 Porvoo (FI)
(72) Inventor: Hagström, Bengt, 41318 Götteborg (SE); Malmros, Peter, 05-01 Four Seasons Park 249693 (SG)
(74) Representative: Campbell, Neil Boyd

(56) References cited:
- WO-A-02/02323
- WO-A-97/06951
- WO-A-2006/037603
- US-A- 5 736 237

## Description

The present invention relates to a multilayer film structure suitable for agricultural use, which may be prepared by co-extrusion or lamination processes.

### Prior Art

Plastic films are used extensively in agriculture in order to improve plant yield. Typically, ethylene-based polymer films are employed for this purpose, in particular for greenhouses, tunnels as well as mulching. Typical examples of known ethylene polymer films employed in this application are LDPE (low density polyethylene) films as well as EVA (ethylene-vinyl acetate) films. These materials typically are employed in the form of single layer films of varying thickness, typically from 100 to 250 µm. The requirements for such films are various and not all types of films are able to satisfy the needs with respect to all required properties. Typical requirements for agricultural films are as follows:
1. They should have high strength and toughness so that they can be put into place without the danger of breakage while, at the same time, enabling also the use under demanding weather conditions, such as strong winds, heavy rainfall, etc.
2. They should provide good resistance against UV degradation as well as against pesticides.
3. They should provide high light transmission, for direct light (clear sky) as well as for diffuse light (cloudy weather), so that the required light transmission for plant growth is possible under sun light with a clear sky as well as with a cloudy sky.
4. They should provide for a rather low IR transmission in order to achieve thermal stability inside the greenhouse e.g. to balance the temperature extremes between hot days and cold nights.
5. They should provide a suitably high scattering of the light transmission, i.e., they should provide a rather diffusive effect in order to decrease direct light impact on young plants while avoiding at the same time sharp shadows excluding certain areas under the film from light transmission.
6. They should provide protection against harmful UV radiation, i.e., they should absorb at least a portion of the natural UV radiation.

As indicated above, direct sunlight through greenhouse coverage, i.e., non-scattered light, can be harmful to young plants. At the same time, direct sunlight also produces sharp shadows preventing light from reaching all parts of the growing crop within a greenhouse. A film showing a higher haze accordingly is advantageous in view of the fact that such a film diffuses the incoming light, however at the same time, it is of course important that light transmission is enabled in the photo active range (PAR) of radiation which is a wavelength of from 400 to 700 nm in order to improve the growth rate of the crop within the greenhouse.

Prior art film materials have i.a. a drawback that they show low degree of scattering, i.e. they have low or no diffusive effect. EVA furthermore is a relatively expensive material limiting its use in agricultural films. In order to improve the scattering effect of agricultural films, mineral fillers have been widely employed, as well as the coating of the film with a paint. This, however, disadvantageously lowers the light transmission of the light in the PAR and, at the same time, also reduces the mechanical strength of the films.

An optimal film for agricultural and horticultural accordingly should combine as much of the advantageous properties indicated above and such a film at least should combine high light scattering, i.e. diffusive, effect, and high transmission of both direct light and diffuse light, in the photoactive range (PAR) while, at the same time, providing a sufficient mechanical strength.

There is a continuous need for alternative film solutions for agricultural and horticultural end use applications which are tailored or better suitable for meeting varying demands of film producers and end users in this field.

### Object of the Present Invention

Accordingly, it is the object of the present invention to provide an alternative multilayer film structure exhibiting an excellent balance of i.a. light transmission properties, whereby the films of the invention are particularly suitable for use in agriculture.

### Description of the Invention

The above objects have been solved with the subject matter of claims 1 to 18. Preferred embodiments are described in the following.

The inventors have now found that a combination of a film layer (A) comprising a multimodal linear low density polyethylene (LLDPE) composition, which
- has a broad molecular weight distribution (MWD) expressed as Mw/Mn and
- provides a matt surface to layer (A), and
   a film layer (B) comprising a polymer composition, which
- provides a less matt surface to layer (B),
   results in a multilayer film with high light scattering effect, i.e. high haze property. Thus unexpectedly, the effect achieved with the matt layer (A) is not sacrificed by the combination with a less matt layer (B).

The term "multilayer film of the invention" is referred herein as "film of the invention" or "Film".

The less matt surface property of layer (B) of Film can be defined in two alternative ways, i.e. by an end property of the less matt layer (B) or, respectively, by the polymer composition properties of the less matt layer (B). Both alternatives, i.e. technical features, define equally applicable product parameters for describing the present invention, which parameters are well known, generally accepted parameters.

According to the first alternative the invention is directed to a multilayer film which comprises at least two layers (A) and (B), wherein
- layer (A) comprises a multimodal linear low density polyethylene (LLDPE) composition with molecular weight distribution MWD (Mw/Mn) of 8 or more, and
- layer (B) comprises a polymer composition selected from a group comprising a low density polyethylene composition (referred herein as LDPE), a copolymer of ethylene with one or more of comonomers selected from vinyl acetate and acrylate, linear low density polyethylene (LLDPE) composition with molecular weight distribution MWD (Mw/Mn) of less than 8 or a polypropylene polymer, said film having a haze of at least 40%.

Preferably the polymer composition present in layer (B) has a gloss value of 60% or more, when determined according to ASTM D 2457 measured at angle 60° using a blown film sample consisting of said polymer composition and having a film thickness of 150 µm.

The skilled person can readily choose the polymer composition for layer (B) accordingly.

The LLDPE composition present in layer (A) as defined above or below has a broad molecular weight distribution. The LLDPE composition when produced to a blown film consisting of said polymer composition has a high haze value, as measured according to ASTM D 1003. Preferably said LLDPE composition of layer (A) has also low gloss value measured according to ASTM D 2457 at an angle of 60° using a film sample consisting of said LLDPE.

Moreover, said polymer composition comprised by layer (B) has preferably also a lower haze value than said LLDPE composition of layer (A).

As mentioned above the specific layer combination of (A)/(B) of the invention provides a high scattering effect, i.e. high haze property. Also unexpectedly the film of the invention shows high scattering effect (haze) irrespective of which side of Film, matt layer (A) or less matt layer (B), is turned to the light.

Preferably, Film possesses said high light scattering effect and at the same time high light transmission property for both diffuse and direct light. This unique balance of properties can be achieved irrespective of which side, (A)-layer side or (B)-layer side of the film structure is turned towards a light source.

Preferably, the Film has additionally excellent mechanical properties, i.e. high film strength as described in details below under film properties.

Accordingly, the films of the invention are particularly suitable for use in agriculture, overcoming drawbacks indicated above in connection with the prior art.

The preferable embodiment wherein the Film has an excellent property balance between light transmission in the photoactive wavelength range (PAR) of from 400 to 700 nm and mechanical properties is highly advantageous for use as coverage for growing plants The term "suitable for agricultural use" means that Film can be used in any shape and size in a form of a coverage which has a surface area e.g. of more than 10 m², even more than 100 m², e.g. in a form of a cover element, e.g. a wall and/or a roof material in greenhouses and tunnels, or in mulching, for plants and that it can be exposed to sunlight, preferably to the outdoor light and weather conditions. The upper limit of surface area is not critical and depends on the needed coverage.

The term "agricultural use" include below the horticultural use as well.

In general herein in the specification parts and claims, when a property of the polymer composition of a layer, of a layer of the Film or of the final Film of the invention is defined above or below by means of a determination method using a film sample, then such film sample was prepared according to the method as described below under "Film Sample Preparation", unless otherwise stated. In case of definitions for a layer of the Film or for the final Film, then the layer thickness or thickness distribution, the number of layers and the final, i.e. total, thickness of the Film is not limited to the layer thickness, layer number and final thickness used for Film Sample, but can vary within the scope of claims.

### Brief Description of the Figure

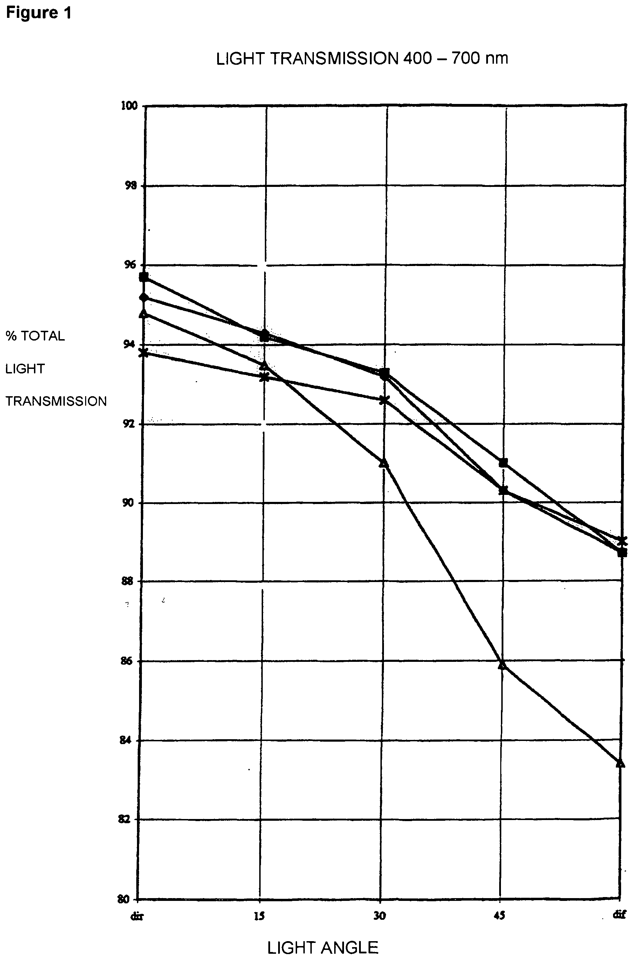

Figure 1 display the results of measurements of the light transmission in the PAR for various films tested in the examples.

### Detailed Description of the Invention

The below given preferable property ranges and subgroups apply generally for polymer compositions, for layers and for Film and can naturally be combined in any combination and in any order to define the preferable embodiments and variants of the invention.

### Film Layers

The term "consisting of", if used below in relation to polymer components present in a film layer, is meant to exclude only the presence of other polymer components. Thus said term includes the optional presence of additives, e.g. conventional film additives, i.e. each layer independently may contain conventional film additives in conventional amounts, such as antioxidants, UV stabilizers, anti-fogging agents, UV absorbers, IR reflectors used in agricultural films and optionally other conventional additives acid scavengers, nucleating agents, anti-blocking agents, slip agents etc., as well as polymer processing agent (PPA). The amount of optional additives is typically less than 5 wt%, e.g. between 0.0001- 3 wt% calculated from the sum (wt%) of additives and polymer components present in a layer.

The Film preferably does not comprise fillers used in the prior art. If fillers or pigments, such as kaolin, are present they may be used in conventional amounts, e.g. up to 10 wt%, such as 5 to 8 wt%.

As identified in claim 1 or 2, the present invention relates to a multilayer film structure comprising at least layer (A) and layer (B). The film of the invention may also comprise further layers e.g. for optimising the light transmission and/or mechanical properties or for providing additional beneficial properties to Film, depending on the needs of a desired end application. Any optional layer is selected so that it has no adverse effect on the light scattering effect achieved with the invention.

In one embodiment Film comprises one or more further layers (A₁) which may comprise, preferably consist of, a LLDPE composition which can be same or different compared to the LLDPE composition of layer (A). If one or more optional layers (A₁) are present, then the LLDPE of layer(s) (A₁) is preferably same as the LLDPE of layer (A). More preferably layer (A) and optional layer(s) (A₁) consist of a LLDPE composition, preferably again the LLDPE in these layers is the same in all of the layers.

In a second embodiment Film comprises one or more further layers (B₁) which may comprises a polymer composition selected from a group as defined above and below for layer (B) (both alternatives of the present invention). Layer (B₁) and (B) may comprise the same or different polymer composition.

From a film production point of view it may be feasible for some end use applications to form e.g. by coextrusion or lamination two adjacent film layers (A)/(A₁) and/or (A)/(B₁), respectively, wherein layers (A) and (A₁) and/or (B) and (B₁), respectively, consist of the same layer material, instead of forming one layer with a layer thickness of (A) + (A₁) or, respectively, (B) + (B₁).

The film of the invention may also contain an adhesive layer or any of the layers may be subjected to a surface treatment in a manner well known in the art. In a preferred embodiment, the layer (A) and layer (B), and optional layers (A₁) and/or (B₁), when present, are in direct contact with each other, i.e. without any adhesive layer or surface treatment of one or more of the layers.

When Film of a (A)/(B)-layered structure comprises further layers, then preferably, layers (A) and (B) as defined above or below form the outermost layers of the multilayer Film.

Preferred films of the invention can be selected from any of the following independent embodiments, wherein the layers are in given order:
(i) (A)/(B)- layer structure, (ii) (A)/(A₁)/(B)-layer structure, (iii) (A)/(B₁)/(B)-layer structure, or (iv) a 5-layer structure, wherein the layers (A) and (B) are the outermost layers and the three core layers are selected from layer (A₁) and (B₁), in any order, wherein said (A), (A₁), (B₁) and (B) are as defined above and below.

As mentioned above both layer sides (A) and (B) provide high light scattering effect and preferably high light transmission effect for diffuse and direct light and, moreover, e.g. in greenhouse applications, both layer (A) side and layer (B) side of Film can be used as an outer layer turned towards to a light source, such as sun light.

Preferably, layer (B) has a gloss value of 60 % or more when determined according to ASTM D 2457 measured at angle 60° using a blown film sample. Although for the gloss determination herein a blown Film Sample consisting of a polymer composition of layer (B) and having a film thickness of 50 µm was used, said gloss value applies for other layer thicknesses, preferably for thicknesses expressed as thickness distribution below under "Film properties". Layer (A) as indicated above comprises a LLDPE providing a matt surface, i.e. a lower gloss, compared with the layer (B). Preferably the gloss value of layer (A), determined as defined above for layer (B) is at least 10 percentage points lower than the gloss value for layer (B), e.g. layer (A) has a gloss of 50% or less, when determined as described for layer (B) above.

Preferably, layer (A) has a haze value of more than 40%, preferably more than 50%, when determined according to ASTM D 1003 using a blown film sample. Again, although for the haze determination herein a blown Film Sample consisting of a polymer composition of layer (A) and having a film thickness of 50 µm was used, however said haze value applies for other layer thicknesses, preferably for thicknesses expressed as thickness distribution below under "Film properties".

In one embodiment of Film, particularly in a greenhouse or tunnel applications, wherein more light reflection is desired towards the growing plants, said layer (A) is used as an outer layer towards a light source, and said layer (B) is used as an interior side, i.e. faces towards the growing plants. In such embodiment the light coming from the film to plants is "soft" and well utilized due to light reflection from layer (B) inside the greenhouse.

Accordingly, the invention is also directed to an article comprising a multilayer film of the invention, wherein said multilayer film has a surface area of at least 10 m². Such articles are e.g. greenhouses or tunnels having said Film coverage.

Invention further provides a construction for agricultural use comprising a rigid framework for defining and retaining the shape of the construction and a coverage covering the framework and being supported by said framework, wherein said coverage comprises the multilayer film of the invention. The construct is preferably a greenhouse or a tunnel for growing plants.

### Layer(A)

The further preferable property definitions for LLDPE usable in the Film of the invention, amounts of LLDPE in a layer and preparation process of LLDPE as defined below in relation to layer (A) apply also for LLDPE when present in optional layer(s) (A₁), or respectively when present in optional layer(s) (B₁).

The term "LLDPE" refers to linear low-density polyethylene which is obtainable by polymerization in a low-pressure process using a conventional coordination catalyst. "LLDPE" used alone means "LLDPE composition".

Said layer (A) comprises at least a LLDPE composition as defined above and below and may comprise also other polymers, such as a second, different LLDPE composition or a high density polyethylene (HDPE) composition.

Layer (A) comprises said LLDPE composition in an amount of at least 50 wt%, preferably at least 70 wt%, more preferably at least 80 wt%. Preferably layer (A) consists of one or more, preferably one LLDPE as defined above or below.

Said LLDPE composition may be polymerised by any conventional coordination catalysis including Ziegler Natta catalysis (referred herein as znLLDPE), single site, including metallocene and non-metallocene, catalysis (referred herein as mLLDPE) or chromium catalysis.

Said LLDPE is multimodal with respect to molecular weight distribution as further explained below. More preferably, said multimodal LLDPE is a multimodal znLLDPE.

The term "multimodal" means herein, if not otherwise stated multimodality with respect to molecular weight distribution and includes also bimodal polymer.

Usually, a polyethylene, e.g. LLDPE composition, comprising at least two polyethylene fractions, which have been produced under different polymerization conditions resulting in different (weight average) molecular weights and molecular weight distributions for the fractions, is referred to as "multimodal". The prefix "multi" relates to the number of different polymer fractions present in the polymer. Thus, for example, multimodal polymer includes so-called "bimodal" polymer consisting of two fractions. The form of the molecular weight distribution curve, i.e. the appearance of the graph of the polymer weight fraction as a function of its molecular weight, of a multimodal polymer, e.g. LLDPE, will show two or more maxima or is typically distinctly broadened in comparison with the curves for the individual fractions. For example, if a polymer is produced in a sequential multistage process, utilizing reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions form typically together a broadened molecular weight distribution curve for the total resulting polymer product.

The multimodal LLDPE comprises a lower weight average molecular weight component (LMW) and a higher weight average molecular weight component (HMW). The LMW component has a lower molecular weight than the higher molecular weight component.

Preferably, said multimodal LLDPE is an ethylene copolymer, whereby at least one of the LMW and HMW components is a copolymer of ethylene. It is preferred that at least HMW component is an ethylene copolymer. The lower molecular weight (LMW) component is also preferably an ethylene copolymer. Alternatively, if one of the components is a homopolymer, then LMW is preferably the homopolymer.

Alternatively, the multimodal LLDPE may comprise further polymer components, e.g. three components being a trimodal LLDPE. Optionally multimodal LLDPE may also comprise e.g. up to 10 % by weight of a well known polyethylene prepolymer which is obtainable from a prepolymerisation step as well known in the art, e.g. as described in WO9618662. In case of such prepolymer, the prepolymer component is comprised in one of LMW and HMW components, preferably LMW component, as defined above.

Preferably said multimodal LLDPE is a bimodal LLDPE comprising said LMW and HMW components and optionally a prepolymerised fraction as defined above.

The feature of Mw/Mn of at least 8 as defined for LLDPE of layer (A) provides, in combination with layer (B), the effect of the invention, i.a. light scattering, i.e. haze property. The other properties of LLDPE of layer (A) of the invention are not critical and can be varied within the scope of the invention depending on the desired end use application. Accordingly, said LLDPE composition usable in the layer(s) of the present invention may have any of the preferred properties given generally below.

Said LLDPE composition may have a density of no more than 940 kg/m³, e.g. a density of 905 to 940 kg/m³, preferably of more than 915 kg/m³, more preferably between 915 to 935 kg/m³.

The melt flow rate, MFR₂, of said LLDPE is preferably in the range of 0.01 to 20 g/10min, e.g. of 0.05 to 10 g/10min, preferably of 0.1 to 6.0 g/10min, more preferably in the range of 0.1 to 5 g/10min. Depending on the intended film embodiment, also low MFR₂ values may be desired for LLDPE. Then MFR₂ of LLDPE may be even less than 3 g/10 min, e.g 0.1 to 2.5 g/10min.

The MFR of LLDPE, may be in the range 5 to 500 g/10 min, preferably 10 to 200 g/10min. The Mw of LLDPE may be in the range 100,000 to 300,000, preferably 150,000 to 270,000. The molecular weight distribution (MWD), Mw/Mn, of LLDPE is 8 or more, preferably at least 10, e.g. 10 to 30, more preferably 10 to 25. LLDPE has preferably a flow rate ratio FRR_{21/2} of at least 10, preferably at least 15. Upper limit of said FRR_{21/2} is not limited and can be e.g. up to 200, particularly in case of multimodal LLDPE.

The term "ethylene copolymer" or "LLDPE copolymer" is used in this context to encompass polymers comprising repeat units deriving from ethylene and at least one other C3-20 alpha olefin monomer. LLDPE copolymer as defined above and below may be formed from ethylene along with at least one C3-12 alpha-olefin comonomer, e.g. 1-butene, 1-hexene or 1-octene. Preferably, LLDPE is a binary copolymer, i.e. the polymer contains ethylene and one comonomer, or a terpolymer, i.e. the polymer contains ethylene and two or three comonomers. Preferably, LLDPE comprises an ethylene hexene copolymer, ethylene octene copolymer or ethylene butene copolymer. The amount of comonomer present in LLDPE is at least 0.25 mol-%, preferably at least 0.5 mol-%, such as preferably 0.5 to 12 mol%, e.g. 2 to 10 mol-% relative to ethylene. In some embodiments a comonomer range of 4 to 8 mol-% may be desired. Alternatively, comonomer contents present in said LLDPE may be 1.5 to 10 wt%, especially 2 to 8 wt% relative to ethylene. Both the LMW and HMW components of a multimodal LLDPE as defined above or below are preferably copolymers of ethylene as defined above. In any copolymeric HMW component, at least 0.5 mol-%, e.g. at least 1-mol%, such as up to 10 mol-%, of repeat units present in HMW are preferably derived from the comonomer.

The LMW component of said LLDPE may have a MFR₂ of at least 50, typically 50 to 3000 g/10 min, preferably at least 100 g/10 min, more preferably 110 to 500 g/10 min. The molecular weight of the low molecular weight component should preferably range from 15,000 to 50,000, e.g. 20,000 to 40,000.

The density of said LMW component may range from 930 to 980 kg/m³, e.g. 940 to 970 kg/m³, more preferably 945 to 955 kg/m³ in the case of copolymer and 960 to 980 kg/m³, preferably 965 to 977 kg/m³ in the case of homopolymer.
Said LMW component has preferably from 30 to 70 wt%, e.g. 40 to 60% by weight of LLDPE with said HMW component forming 70 to 30 wt%, e.g. 40 to 60% by weight. In one embodiment of the invention the HMW component comprises 50 wt% or more of said multimodal LLDPE as defined above or below.

Said HMW component has a lower MFR₂ and a lower density than the LMW component.

Said HMW component has preferably an MFR₂ of less than 1 g/10 min, preferably less than 0.5 g/10 min, especially less than 0.2 g/10min. The density of HMW is typically less than 915 kg/m³, e.g. less than 910 kg/m³, preferably less than 905 kg/m³. The Mw of the higher molecular weight component may range from 100,000 to 1,000,000, preferably 250,000 to 500,000.

Multimodal LLDPE compositions that are suitable in said layer (A), when produced to a blown film consisting of said LLDPE composition and having a film thickness of 50 µm, provide preferably a haze value of more than 40%, preferably more than 50%, or, if desired, even more than 60%, when determined according to ASTM D 1003.

Said LLDPE for layer (A) is preferably a multimodal znLLDPE copolymer composition as defined above or below. Such LLDPE's are available i.a. from Borealis and other PE producers/suppliers. The following commercial multimodal znLLDPE grades are given only as examples without limiting thereto: I.a. grades available from Borealis, such as Borstar® FBXXXX grades, e.g. Borstar® FB2310 or Borstar® FB2230 etc., can be mentioned as feasible multimodal LLDPE materials for layer (A) and, if present, for other layer(s).

The LLDPE compositions and the optional other polymers usable in layer (A) or in any other layer are known and can be any conventional, e.g. commercially available. Alternatively, suitable polymer compositions can be produced in a known manner according to or analogously to conventional polymerisation processes including solution, slurry and gas phase processes, described in the literature of polymer chemistry.

Said LLDPE compositions with broad MWD, multimodal (e.g. bimodal) polymers can be made by mechanical blending two or more, separately prepared polymer components or, preferably, by in-situ blending in a multistage polymerisation process during the preparation process of the polymer components. Both mechanical and in-situ blending is well known in the field.

Accordingly, preferred multimodal LLDPE polymers are obtainable by in-situ blending in a multistage, i.e. two or more stage, polymerization process. Alternatively, multimodal LLDPE may be obtainable by using two or more different polymerization catalysts, including multi- or dual site catalysts, in a one-stage polymerization.

Preferably said multimodal LLDPE is produced in at least two-stage polymerization using the same catalyst, e.g. a single site or Ziegler-Natta catalyst. Thus, for example two slurry reactors or two gas phase reactors, or any combinations thereof, in any order can be employed. Preferably however, the multimodal LLDPE is made using a slurry polymerization in a loop reactor followed by a gas phase polymerization in a gas phase reactor.

A loop reactor - gas phase reactor system is well known as Borealis technology, i.e. as a BORSTAR® reactor system. Any multimodal LLDPE polymer present in layers of the invention is thus preferably formed in a two-stage process comprising a first slurry loop polymerisation followed by gas phase polymerisation. Such multistage process is disclosed e.g. in EP517868.

The conditions used in such a process are well known. For slurry reactors, the reaction temperature will generally be in the range 60 to 110°C (e.g. 85-110°C), the reactor pressure will generally be in the range 5 to 80 bar (e.g. 50-65 bar), and the residence time will generally be in the range 0.3 to 5 hours (e.g. 0.5 to 2 hours). The diluent used will generally be an aliphatic hydrocarbon having a boiling point in the range -70 to +100°C. In such reactors, polymerization may if desired be effected under supercritical conditions. Slurry polymerisation may also be carried out in bulk where the reaction medium is formed from the monomer being polymerised.

For gas phase reactors, the reaction temperature used will generally be in the range 60 to 115°C (e.g. 70 to 110°C), the reactor pressure will generally be in the range 10 to 25 bar, and the residence time will generally be 1 to 8 hours. The gas used will commonly be a non-reactive gas such as nitrogen or low boiling point hydrocarbons such as propane together with monomer (e.g. ethylene).

As an example a chain-transfer agent, preferably hydrogen, is added as required to the reactors, and at least 100 to preferably at least 200, and up to 1500, preferably up to 800 moles of H₂/kmoles of ethylene are added to the loop reactor, when the LMW fraction is produced in this reactor, and 0 to 60 or 0 to 50, and, again depending on the desired end application, in certain embodiments even up to 100, or up to 500 moles of H₂/kmoles of ethylene are added to the gas phase reactor when this reactor is producing the HMW fraction.

Preferably, the lower molecular weight polymer fraction is produced in a continuously operating loop reactor where ethylene is polymerised in the presence of a polymerization catalyst as stated above and a chain transfer agent such as hydrogen. The diluent is typically an inert aliphatic hydrocarbon, preferably isobutane or propane. The higher molecular weight component can then be formed in a gas phase reactor using the same catalyst.

Prepolymerisation step may precede the actual polymerisation.

Where the higher molecular weight component is made as a second step in a multistage polymerisation it is not possible to measure its properties directly. However, e.g. for the above described polymerisation process of the present invention, the density, MFR₂ etc of the HMW component can be calculated using Kim McAuley's equations. Thus, both density and MFR₂ can be found using K. K. McAuley and J. F. McGregor: On-line Inference of Polymer Properties in an Industrial Polyethylene Reactor, AlChE Journal, June 1991, Vol. 37, No, 6, pages 825-835. The density is calculated from McAuley's equation 37, where final density and density after the first reactor is known. MFR₂ is calculated from McAuley's equation 25, where final MFR₂ and MFR₂ after the first reactor are calculated.

LLDPE as defined above and below may be made using any conventional catalyst, such as a chromium catalyst, a single site catalyst, including metallocenes and non-metallocenes as well known in the field, or a Ziegler Natta catalyst. The preferred are any conventional Ziegler Natta catalysts and the choice of an individual catalyst used to make znLLDPE, respectively, is not critical.

Preferred Ziegler Natta catalysts comprise a transition metal component and an activator. The transition metal component comprises a metal of Group 4 or 5 of the Periodic System (IUPAC) as an active metal. In addition, it may contain other metals or elements, like elements of Groups 2, 13 and 17. Preferably, the transition metal component is a solid. More preferably, it has been supported on a support material, such as inorganic oxide carrier or magnesium halide. Examples of such catalysts are given, among others in WO 95/35323, WO 01/55230, WO 2004/000933, WO2004/000902, EP 810235 and WO 99/51646.

In a very preferable embodiment of the invention the polyethylene composition is produced using a ZN catalysts disclosed in WO2004/000902, WO 2004/000933 or EP 688794.

Conventional cocatalysts, supports/carriers, electron donors etc. can be used in a known manner.

### Optional layer(s) (A₁)

Optional layer(s) (A₁) as defined above or below may comprise or consists of same or different polymer composition. When present, at least one layer (A₁) comprises preferably one or more LLDPE composition as defined above or below.

In embodiments wherein e.g. high mechanical properties, such as stiffness, are desirable, then, preferably, at least one layer (A₁), when present, may comprise HDPE.

When present, layer (A₁) comprising a LLDPE preferably comprises same LLDPE as defined for layer (A) above and below. Also preferably, when LLDPE is present in layer (A₁), then said layer (A₁) consists of said LLDPE.

In one preferable embodiment, when optional layer(s) (A₁) present, Film comprises one layer (A₁).

### Layer(B)

The further preferable property definitions for a polymer composition, amounts thereof in a layer and preparation process of polymer composition as defined below in relation to layer (B) apply also for said polymer composition when present in optional layer(s) (B), or respectively when present in optional layer(s) (A₁).
According to the second alternative of the invention, layer (B) of Film provide preferably a gloss value of more than 60%, when determined according to ASTM D 2457 measured at angle 60° using a blown film sample. Again, the preferable thickness distribution ranges are described below under "Film properties". Although herein a blown Film Sample of layer (B) with a thickness of 50 µm was used for the determination, however it is to be understood that the thickness is not limited thereto, but can be varied, preferably within the below given thickness distribution range.

The layer (B) of Film can be defined alternatively, and preferably, according to first alternative of the invention as comprising a polymer composition selected from a group comprising, preferably consisting of, low density polyethylene composition (referred herein as LDPE), a copolymer of ethylene with one or more of comonomers selected from vinyl acetate and acrylate, LLDPE with Mw/Mn of less than 8 or polypropylene polymer.

Said group of polymers of layer (B) as defined in first and second alternative definitions of the invention are typically well known in the field and are commercially available or can be produced according to polymerization process described in literature.

In a preferred embodiment the polymer of said layer (B) is selected from a group of polymers as defined in the first alternative.

Said layer (B) comprises preferably LDPE composition, an ethylene alkyl acrylate polymer (e.g. an ethylene C1-10 alkyl acrylate polymer), such as ethylene methyl acrylate (EMA), ethylene ethyl acrylate (EEA) and ethylene butyl acrylate (EBA), or any mixture thereof, preferably LDPE or EVA.

LDPE means herein a low-density ethylene homopolymer produced in high-pressure polymerization process. Such LDPEs are well known in the art and they typically contain long chain branching which differentiates LDPEs from linear low-density polyethylene, LLDPE, polymers, such as znLLDPE and mLLDPE polymers. LDPE has typically a MFR₂ of at least 0.05 g/10 min, preferably in the range 0.1-20 g/10 min, more preferably 0.3-10 g/10 min, still more preferably 0.5-5 g/10 min. The density of the LDPE is preferably 905-940 kg/m³, more preferably 910 to 937 kg/m³, e.g. 915 to 935 kg/m³ (ISO 1183). The Vicat softening temperature of LDPE present in layer (B) is preferably 60-200°C, more preferably 80-150°C, e.g. about 90-110°C. The Tm of the LDPE present in layer (B) is preferably 70-180°C, more preferably 90-140°C, e.g. about 110-120°C.

LDPEs suitable for Film and for layer (B) are any conventional LDPEs, e.g. commercially known LDPEs or they may be prepared according to any conventional high pressure polymerisation (HP) process in a tubular or autoclave reactor using a free radical formation. Such HP processes are very well known in the field of polymer chemistry and described in the literature, see e.g. Vieweg, Schely and Schwarz: Kunstoff Hanbuch, Band IV, Polyolefins, Carl Hanser Verlag (1969), pages 39-51. Typical pressures are from 1000 to 3000 bar. The polymerization temperature is preferably 150-350°C. The free radical initiators are commonly known, e.g. organic peroxide based initiators.

The copolymer of ethylene with one or more acrylate comonomer may have an acrylate content of 1 to 40 wt%, preferably 2 to 30 wt%, more preferably 3 to 28 %, especially 5 to 25 wt%.

The ethylene vinyl acetate copolymers (EVA) are also well known in the field and commercially available or can be produced according to polymerization process described in the literature. EVA may have a MFR2 in the range 0.01-20 g/10 min, more preferably 0.1-10 g/10 min. Depending on the end use application it may be preferred to use EVA with a MFR₂ of 0.2-5 g/10 min. Preferably, the vinyl acetate content of EVA is in the range 1 to 40 wt%, preferably 2 to 30 wt%, more preferably 3 to 28 %, especially 5 to 25 wt%.

The ethylene acrylate and vinyl acetate copolymers are very well known and commercially available (e.g. from DuPont) or produced according to or analogously to the polymerisation methods descried in the literature for the preparation of ethylene acrylate and vinyl acetate copolymers, preferably in a high pressure polymerisation using organic peroxides in a manner well known in the art. The HP based copolymers are also referred as LDPE copolymers. Thus preferable copolymers of ethylene for layer (B) are LDPE copolymers, such as EMA, EEA, EBA or EVA, preferably EVA.

The propylene polymer option as a layer (B) polymer can be any known propylene polymer (PP) including PP well known as propylene homo polymer, propylene random copolymer and heterophasic block copolymer of propylene. All these are very well known in the field of polymers and are commercially available or can be produced using the convention polymerization processes. The propylene polymer properties are selected in a known manner to be suitable for film preparation.

Preferred LLDPE has narrower MWD than the LLDPE of layer (A), such as less than 8. LLDPE may be unimodal or multimodal and may be znLLDPE or mLLDPE.

The polymers suitable for layer (B) are not limited to above, but other polymers can also be used within the scope defined in claims.

Polymer compositions suitable as said layer (B) material, when produced to a blown film consisting of said polymer composition and having a film thickness of 50 µm, preferably have a gloss value of 60% or more, preferably of 75 % or more, more preferably of 85 % or more when defined according to ASTM D 2457 measured at 60° angle.

In one preferable embodiment layer (B) comprises at least LDPE, more preferably consists of LDPE.

In another preferable embodiment layer (B) comprises at least EVA, preferably consists of EVA.

Generally, EMA, EEA, EBA and EVA, preferably EVA, can be used alone or additionally in embodiments wherein increased barrier for infra red radiation (IR), i.e. decreased IR radiation transmittance, is desired for Film in order to provide good thermal effect.

### Optional layer(s) (B₁)

Optional layer(s) (B) as defined above or below may comprise or consists of same or different polymer composition. When present, at least one layer (B₁) comprises preferably comprise one or more polymer composition selected from a group as defined above and below for layer (B).

In embodiments wherein e.g. high thermal stability is required, such as lower IR transmission, then layer(s) (B₁), when present, preferably comprises one or more of EMA, EEA, EBA and EVA, preferably EVA.

When present, layer(s) (B₁) may comprise or consist of same polymer composition as layer (B). Alternatively, when present, layer(s) (B₁) may comprise or consist of different polymer composition as layer (B). If layer(s) (B₁) comprise, preferably consists of, a different polymer composition, it is preferably selected from a group as defined for layer (B) above or below.

In a preferable embodiment, when layer(s) (B₁) are present, Film comprises one layer (B₁).

Layers (A), (B) and, if present, optional layers (A₁) and (B₁), of Film may each independently contain conventional additives as defined above. As well known this can be added to the polymer composition e.g. during the preparation of the polymer of during the film preparation process.

### Film preparation

For film formation using polymer mixtures, the different polymer components in any of layers (A) and (B) and in optional layers (A₁) and/or (B₁), are typically intimately mixed prior to layer formation, for example using a twin screw extruder, preferably a counter-rotating extruder.

The layered structure of the film of the invention may be prepared by any conventional film formation process including extrusion procedures, such as cast film or blown film extrusion, lamination processes or any combination thereof. Preferred methods are coextrusion and lamination, more preferably coextrusion.

Further preferably, the multilayer film comprising layers (A), (B) and the optional layers (A₁) and/or (B₁) is formed by blown film extrusion, more preferably by blown film coextrusion processes. The compositions providing layers (A), (B) and optionally layers (A₁) and/or (B₁) can typically be produced by extrusion through an annular die, blowing into a tubular film by forming a bubble which is collapsed between nip rollers after solidification. This film can then be slit, cut or converted as desired.

The blown (co)extrusion can be effected at a temperature in the range 160°C to 240°C, and cooled by blowing gas (generally air) at a temperature of 10 to 50°C to provide a frost line height of 1 to 8 times the diameter of the die. The blow up ratio should generally be in the range 1.2 to 6, preferably 1.5 to 4.

### Film Properties

Depending on the end application the film of the invention the Film thickness can vary. Typically, Film has a total thickness of at least 30 µm, preferably at least 50 µm. The upper limit is not critical and may be e.g. 400 µm or less. Preferred thickness may vary in the range of 50 to 300 µm, preferably 75 to 250 µm, more preferably 100 to 200 µm.

Also the layer thickness distribution (%) of Film can be tailored depending on the end use. Thus the Film of (A)/(B)-structure of the invention may have a layer thickness distribution (%) of (5-95%)/(95-5%), typically (90-50%)/(10-50%), preferably (80-20%)/(20-80%) calculated from the final Film thickness of 100%. In one of the preferable embodiments the layer thickness distribution (%) is preferably A/B of (90-60%)/(10-40%), more preferably (85-75%)/(15-25%) calculated from the final Film thickness of 100%. When the optional layer (A₁) is present, then layers (A) and (A₁) may together form have a thickness distribution (%) as defined above for layer (A) in a (A)/(B) Film. I.e. layers (A) and (A₁) together may form 5-95%, typically 90-50%, preferably 90-65%, more preferably 85-75%, of the final Film (100%). The layer (A₁) forms typically 10-90%, preferably 40-60%, of the combined thickness of layers (A) and (A₁). Similarly, when the optional layer (B₁) is present, layers (B) and (B₁) together total the layer thickness distribution (%) as defined above for layer (B) in said (A)/(B) Film. The layer (B₁) forms typically 10-90%, preferably 40-60%, of the combined thickness of layers (B) and (B₁).

Below are given some advantageous embodiments of Film which represent the preferable properties of the final film of the invention.

The Film properties are measured using a film sample having a thickness of 150 µm and prepared as defined below in "Film Sample Preparation". It is noted again that, although for the property determination herein said Film Sample was used, however the below given property definitions apply for other Film variants as well, including other layer thicknesses, thickness distributions (%), number of layers and final Film thicknesses within the claimed scope, e.g. defined above in the description as preferable ranges, subgroups and/or embodiments. The used determination methods are defined later below under "Determination methods".

The multilayer film of the invention (Film) has very good mechanical properties.

Film of the invention has preferably tear strength (ISO 6383/2) in transverse direction (TD) of at least 10 N, preferably at least 15 N, more preferably at least 20 N. Upper limit of said tear resistance of Film is not critical an may be e.g. of less than 50 N.

Film of the invention has typically a tensile strength (ISO 527-3) in machine direction (MD) of at least 30 MPa, preferably at least of 35 MPa. The upper limit of said tensile strength (MD) of Film is not critical an may be e.g. less than 60 MPa

Tensile strength (ISO 527-3) in TD of Film is preferably of at least 25 MPa, more preferably at least of 30 MPa. In embodiments where very good mechanical properties are beneficial, Film may provide even higher tensile strength in TD, such as at least 35 MPa. Upper limit of said tensile strength of Film is not critical and may be e.g. less than 60 MPa in TD.

The impact strength (ISO 7765-1, method "A") determined as dart drop is preferably at least 300 g, preferably at least 500 g, more preferably at least 700 g when determined using a film sample of thickness of 150 µm. In embodiments wherein high impact strength is desired, then Film may have impact strength of at least 1000 g or even at least 1200 g.

The Film of the invention has also very good light transmission properties.

Haze value of said Film is at least 40% more, preferably at least 50%, more preferably at least 60%, when determined according to ASTM D 1003, irrespective from which side of said Film the haze is determined. Upper limit of haze of Film is not critical and may be e.g. less than 80%. In an embodiment wherein layer (A) preferably comprises, more preferably consists of, a multimodal znLLDPE and layer (B) comprises, preferably consists of, LDPE, the Film has preferably a haze value of at least 65%.

Film of the invention has preferably a Gloss (ASTM D 2457, at angle 60°) of at least 50%, preferably of at least 60%, when measured from layer (B) side of Film. Upper limit of said gloss is not critical and may be e.g. less than 90%.

Film of the invention has preferably a Gloss (ASTM D 2457, at angle 60°) of not more than 30%, preferably of not more than 20%, when measured from layer (A) side of Film. Lower limit of said gloss of Film from layer (A) side may typically be at least 1 %.

In one feasible embodiment, transmission of direct light (angle 0°) of Film of the invention may be at least 80 %, preferably at least 90 %, more preferably at least 94 %, irrespectively from which side of Film. Upper limit of said transmission of direct light of Film is less than 100%.

Transmission of diffuse light (scattered light) of Film of the invention is preferably at least 80 %, more preferably at least 84 %, or in high diffuse film embodiments said Film can provide transmission of diffuse light even as high as at least 85 %, irrespectively from which side of Film the transmission of diffuse light haze is determined. Upper limit of said transmission of diffuse light of Film is less than 100%.

The IR transmittance of Film of the invention is suitably low, typically in the range of from 75 to 45% when using a film sample of thickness of 150 µm.

Film may be selected from one of the following independent embodiment, in a given layer order:
(i) Film which comprises, preferably consists of,
   - layer (A) and an optional layer (A₁), which layer (A) and optional layer (A₁) comprise, preferably consists of, a multimodal znLLDPE,
   - layer (B) and an optional layer (B₁), which layer (B) and optional layer (B₁) comprise, preferably consists of, LDPE;
(ii) Film which comprises, preferably consists of,
   - layer (A) and an optional layer (A₁), which layer (A) and optional layer (A₁) comprise, preferably consists of, a multimodal znLLDPE,
   - layer (B) and an optional layer (B₁), which layer (B) and optional layer (B₁) comprise, preferably consists of, EVA, wherein said layer (A), layer (B), optional layer (A₁), optional layer (B₁), multimodal znLLDPE, LDPE and EVA are as defined above or in claims.

Said Film with preferable layer structures as defined above may be selected from one of the following, in a given layer order: (i) A/B, (ii) (A)/(A₁)/(B) and (iii) (A)/(B₁)/(B).

This unique combination of properties as achievable with the present invention clearly shows the surprising superiority of the multilayer structure in accordance with the present invention, compared with prior art materials. With the film of the invention the use of fillers or paint can be avoided and still get an excellent light scattering property, preferably, together with a mechanical strength.

### Determination Methods

To disclose the invention in a manner sufficiently clear and complete, when a film sample is used in below determination methods for defining the properties of the invention generally in the description part above or in claims below, as well as for measuring the properties of examples below, unless otherwise stated, then the used film formation technology and the used thickness of said film sample were as described below under "Film Sample Preparation". Said film sample is referred in the relevant determination method descriptions below as "Film Sample". It is to be understood that for said property definitions any of the layer thickness/layer thickness distribution (%) of the layers of Film, layer number, final, i.e. total, thickness of Film or film formation technology used for Film Sample are not limiting the Film, but said layer thickness/layer thickness distribution (%) of the layers of Film, the layer number, the final, i.e. total, thickness of Film and/or the film formation technology can be varied within the scope of claims.

Otherwise a sample used in a determination method is in accordance with the standard specified for that method.

**Density** of the materials was measured according to ISO 1183:1987 (E), method D, with isopropanol-water as gradient liquid. The cooling rate of the plaques when crystallising the samples was 15 C/min. Conditioning time was 16 hours.

**MFR₂, MFR₅ and MFR₂₁** were measured according to ISO 1133 at 190°C at loads of 2.16, 5.0, and 21.6 kg respectively. Flow rate ratio FRR_{21/2} is calculated from MFR₂₁/MFR₂.

**Molecular weights and molecular weight distribution (Mn, Mw and MWD)** Mw, Mn and MWD were measured by Gel Permeation Chromatography (GPC) according to the following method:

The weight average molecular weight Mw and the molecular weight distribution (MWD = Mw/Mn wherein Mn is the number average molecular weight and Mw is the weight average molecular weight) is measured by a method based on ISO 16014-4:2003. A Waters 150CV plus instrument, equipped with refractive index detector and online viscosimeter was used with 3 x HT6E styragel columns from Waters (styrenedivinylbenzene) and 1,2,4-trichlorobenzene (TCB, stabilized with 250 mg/L 2,6-Di tert butyl-4-methyl-phenol) as solvent at 140°C and at a constant flow rate of 1 mL/min. 500 µL of sample solution were injected per analysis. The column set was calibrated using universal calibration (according to ISO 16014-2:2003) with 10 narrow MWD polystyrene (PS) standards in the range of 1.05 kg/mol to 11 600 kg/mol. Mark Houwink constants were used for polystyrene and polyethylene (K: 9.54 x10⁻⁵ dL/g and a: 0.725 for PS, and K: 3.92 x10⁻⁴ dL/g and a: 0.725 for PE). All samples were prepared by dissolving 0.5 - 3.5 mg of polymer in 4 mL (at 140°C) of stabilized TCB (same as mobile phase) and keeping for 2 hours at 140°C and for another 2 hours at 160 °C with occasional shaking prior sampling in into the GPC instrument.

**Tm and Tcr** both were measured according to ISO 11357-1 on Perkin Elmer DSC-7 differential scanning calorimetry. Heating curves were taken from -10°C to 200°C at 10°C/min. Hold for 10 min at 200°C. Cooling curves were taken from 200°C to -10°C at 10°C per min. Melting and crystallization temperatures were taken as the peaks of endotherms and exotherms. The degree of crystallinity was calculated by comparison with heat of fusion of a perfectly crystalline polyethylene, i.e. 290 J/g.

**Comonomer content (mol%)** was determined based was determined by C¹³NMR. The C¹³NMR spectra of the polymers were recorded on Bruker 400MHz spectrometer at 130°C from samples dissolved in 1,2,4-trichlorobenzene/benzene-d6 (90/10 w/w).

**Impact Strength is determined on Dart-drop (g/50%).** Dart-drop was measured using ISO 7765-1, method "A". A dart with a 38 mm diameter hemispherical head was dropped from a height of 0.66 m onto a Film Sample clamped over a hole. If the specimen failed, the weight of the dart was reduced and if it did not fail the weight was increased. At least 20 specimens were tested. The weight resulting in failure of 50% of the specimens was calculated and this provides the dart drop impact (DDI) value (g). The relative DDI (g/µm) was then calculated by dividing the DDI by the thickness of the film.

**Tear resistance (determined as Elmendorf tear (N)):** Applies for the measurement both in machine direction and in transverse direction. The tear strength was measured according ISO 6383/2 using a Film Sample. The force required to propagate tearing across a film sample was measured using a pendulum device. The pendulum swings under gravity through an arc, tearing the specimen from pre-cut slit. The specimen was fixed on one side by the pendulum and on the other side by a stationary clamp. The tear resistance was the force required to tear the specimen. The relative tear resistance (N/mm) can be calculated by dividing the tear resistance by the thickness of the film.

**Tensile modulus (secant modulus, 0.05-1.05%)** was measured according to ASTM D 882-A using a Film Sample. The speed of testing was 5mm/min. The test temperature was 23°C. Width of the film was 25 mm.

**Tensile Strength** was measured according to ISO 527-3 using a Film Samples. The speed of testing was 500 mm/min. The test temperature is 23°C. Width of the film was 25 mm.

**Elongation at break** was determined according to ISO 527-3 using a Film Sample.

**Haze** was measured according to ASTM D 1003 using a Film Sample. The relative haze can be calculated by dividing the haze% of a film sample by the thickness of the used film (haze%/µm).

**Gloss** was measured at angle 60° according to ASTM D 2457 using a Film Sample.

**Transmission of Direct Light** at angle 0° (perpendicular), angle 15°, angle 30° or angle 45°: A Light Source was placed above the Film Sample and light was illuminated perpendicular onto or with above given angle on said Film Sample. Light that transmitted through the Film Sample then entered an external integrated sphere arranged behind (below) the Film Sample. The amount of light at different wavelengths of transmitted light was measured with a spectrophotometer.

**Transmission of Diffuse Light:** The light to illuminate the Film Sample was first passed through an external integrated sphere arranged above the Film Sample, which external sphere created a scattered light beam which was then directed to pass through the Film Sample into a second external integrated sphere arranged behind (below) the Film Sample. The amount of light at different wavelengths that were transmitted through the Film Sample was measured with a spectrophotometer.

**IR transmittance** was measured by subjecting an infrared radiation source above the Film Sample and finally the amount of IR-radiation that transmitted through the Film Sample was measured.

### Film Sample Preparation

### Preparation of Film Samples used in determinations for defining generally above or in claims below properties of polymer compositions used in layer(s) of Film or properties of individual layer(s) of Film:

A Film Sample with a thickness of 50µm was prepared as a three-layer structure ABC using a 3-layer Windmöller&Hölscher Varex coextrusion line for blow-film with a blow up ratio of 2.3 and a frost line height of 600 mm. The extruder had a diameter of 200 mm and a die gap of 1.0 mm. The output rate was 98 kg/h and the die temperature was set to 240°C. A three-layer structure of A/B/C 20µm/20µm/10µm was prepared. Thus both in case of a property definition of a polymer composition or of a layer, said polymer composition to be tested or the polymer composition of said layer was used for forming each layer of the 3-layer structure.

### Preparation of Film Samples used in determinations for defining generally above or in claims below properties of Film of the invention:

A Film Sample with a thickness of 150µm was prepared as a three-layer structure ABC using a 3-layer Windmöller&Hölscher Varex coextrusion line for blow-film with a blow up ratio of 2.1 and a frost line height of 500 mm. The extruder had a diameter of 250 mm and a die gap of 0.8 mm. The output rate was 90 kg/h and the die temperature was set to 240°C. The layer thickness distribution 62.5/62.5/25 µm.

In case of A/B structure the layers A/A/B were prepared which corresponds to A/B of 125/25 µm.

It is clear that the Film properties defined with said film sample apply to preferred Film properties of any Film of the invention with varying layer structure and varying thickness distribution. This is evidenced with the following examples of Film with different structures.

The following examples illustrate the present invention.

### Examples

### Polymer materials

**LLDPE1:** The multimodal znLLDPE polymer used in the films of examples of the invention was prepared as follows: Multimodal znLLDPE polymer was prepared in a pilot scale multistage reactor system containing a loop reactor and a gas phase reactor. A prepolymerisation step preceded the actual polymerisation step. The prepolymerisation stage was carried out in slurry in a 50 dm³ loop reactor at about 80 °C in a pressure of about 65 bar using the polymerisation catalyst prepared according to Example 1 of WO 2004/000902 and triethylaluminium as the cocatalyst. The molar ratio of aluminum of the cocatalyst to titanium of the catalyst was about 20. Ethylene was fed in a ratio of (200g of C2)/(1g/catalyst). Propane was used as the diluent and hydrogen was fed in amount to adjust the MFR2 of the prepolymer to about 10 g/10 min. The obtained slurry together with prepolymerised catalyst and triethyl aluminum cocatalyst were transferred to the actual polymerisation step, i.e. introduced into a 500 dm³ loop reactor, wherein a continuous feed of propane, ethylene and hydrogen was also introduced. The ratio of H2/C2 in the reaction mixture was 240 mol/kmol. The mol-ratio of 1-butene comonomer to ethylene, C4/C2 was 570mol/kmol. The loop reactor was operated at 95 °C temperature and 60 bar pressure. The polymer obtained from the loop reactor at a production rate of about 30 kg/h had MFR2 of 300 g/10 min and a density of about 951 kg/m3.

The slurry was then transferred to a fluidised bed gas phase reactor, where also additional ethylene, 1-butene comonomer and hydrogen were added, together with nitrogen as an inert gas to produce the HMW component in the presence of the LMW component. The ethylene content in gas phase reactor was 19 mol-%, the ratio of H2/C2 in the recycle gas was 7 mol/kmol and the ratio of C4/C2 was 460 mol/kmol. The gas phase reactor was operated at a temperature of 80 °C and a pressure of 20 bar. The production rate of the polymer was about 75 kg/h. The split (wt%) loop/gas phase was 41/59. The polymer obtained from the gas phase reactor had. The comonomer content was 7.6 wt%.

The reactor powder was then stabilised with conventional additives and pelletised in a known manner using CIM90P counter-rotating twin screw extruder manufactured by Japan Steel Works. The pelletized final polymer product had Mw of 233 000 g/mol, Mw/Mn of 17, MFR₂ of 0.2 g/10 min, MFR₂₁ of 22 g/10 min and a density of about 923 kg/m3.
Haze (%) of LLDPE 1: The LLDPE 1 used had a haze value of 60-65 % when measured according to ASTM D 1003 using a blown Film Samples consisting of LLDPE 1 and prepared as described above for Film Samples for polymer composition properties, but having a film thicknesses varying between 37-40 µm.
Moreover, said LLDPE 1 when produced to a Film Sample consisting LLDPE1 with a thickness of 150 µm had a haze value of 72%

**LDPE1** used in the examples of the invention and comparative examples was commercially available LDPE grade produced by high-pressure polymerization, supplied by Borealis. LDPE1 had a MFR2 of 1.2 g/10min and Density 922 kg/m³.

**LDPE2:** used in the examples of the invention and comparative examples was commercially available LDPE grade produced by high-pressure polymerization, supplied by Borealis. LDPE2 had a MFR2 0.9, density 922 kg/m³.

**EVA1** used in the examples of the invention and comparative examples was commercially available ethylene vinyl acetate LDPE grade produced by high-pressure polymerization, supplied by Borealis. EVA 1 had a MFR2 of 0.25 g/10min and vinyl acetate content of 14%.

### Film Example 1

The example 1 of invention: A three layer structure ABC was prepared with a coextrusion line given above in "Film Sample Preparation" for blow-film with a blow up ratio of 2.3 and a frost line height of 600 mm. The extruder had a diameter of 200 mm and a die gap of 1.0 mm. The output rate was 98 kg/h and the die temperature was set to 240°C. A three-layer structure of A/B/C 20µm/20µm/10µm was prepared, with layers A and B consisting of LLDPE1 and layer C consisting of LDPE1.

The gloss of the two outer layers was determined and the LLDPE1 outer layer (A) displayed a gloss of 13, while the LDPE1 side (B) displayed a gloss of 80. Such a difference in gloss of the layers however surprisingly did not affect the light transmission (see Figure 1: ◆ ABC with C turned towards light source; ■ ABC with A turned towards light source; Δ LLDPE1 film; x LDPE1 film).

As comparison a standard LDPE singly layer film was evaluated, prepared from the LDPE1 material according to above blown coextrusion method but using LDPE1 in each of the three layers to obtain a "single" layer film with thickness 50 µm.

Figure 1 shows a comparison of light transmission for the three film samples identified above. As further comparison a single layer film of the LLDPE material alone has been evaluated. This comparative film sample was prepared from LLDPE1 according to above blown coextrusion method but using LLDPE1 in each of the three layers to obtain a "single" layer film with thickness 50µm.

The results clearly show that surprisingly the layer structure of the invention displays the best light radiation properties, irrespective of the orientation of the film, i.e. the layer being directed to the light source (LLDPE layer or LDPE layer). The single layer LLDPE material has an insufficient light transmission.

Further results of the film evaluation are presented in table 1 below.

**Table 1**

| | Direct light transmission | Diffuse light transmission | Haze | Dart | Tensile strength | Elongation at break |
|---|---|---|---|---|---|---|
| | (0°/30°) | (scattered light) | (%) | (g) | MD/TD | MD/TD |
| | | | | | (MPa) | (%) |
| Example 1 of invention = ABC three layer structure | 95.8/93.3 | 88.8 | 53 | 210 | 50/35 | 580/940 |
| Comparative example: LDPE single layer film | 93.8/92.7 | 89.0 | 18 | 170 | 34/27 | 360/710 |

These results further illustrate the superiority of the three-layer structure of the invention, not only with respect to optical but also with respect to mechanical properties.

### Film Example 2

Further film samples of the invention were produced using LLDPE1, LDPE1, LDPE2 and EVA1 material as identified above. Each layer consisted of one of said polymer material. The Film examples were prepared as described in example 1 with the exception of that a blow up ratio of 2.5, a frost line height of 500 mm and output of about 90 kg/h was used to obtain final film thickness of 150 µm.

The examples of the invention:
COEX1: B/B₁/A = 62.5/62.5/25 (layer thickness in µm) = (EVA1)/(EVA1)/(LLDPE1)
COEX2: B/A₁/A = 50/50/50 (layer thickness in µm) = (EVA1)/(LLDPE1)/(LLDPE1)
COEX3: B/A₁/A = 25/62.5/62.5 (layer thickness in µm) = (LDPE1)/(LLDPE1)/(LLDPE1)

For the comparison further single layer films were produced from LLDPE1, LDPE1 and EVA1. Film sample were prepared to a thickness of 150 µm on a mono layer blown film extruder as defined under "Film Sample Preparation" in the following conditions: die diameter 250 mm, die gap 0.8 mm, blow up ratio 2.1, frost line height 500 mm and output rate 90 kg/h. LLDPE1 monolayer film with a thickness of 120 µm was prepared as LDPE1 and EVA1 films with following modifications: blow up ratio was 3, frost line height 800 mm on a 200 mm diameter die and die gap 1.0 mm.

The results of the film evaluations are summarized in table 2.

**Table2**

| | EVA | LDPE1 | LLDPE1 | COEX1 | COEX2 | COEX3 |
|---|---|---|---|---|---|---|
| Gloss | 91 | 91 | 13 | 60/12 | 63/9 | 72/9 |
| Haze | 4 | 11 | 72 | 57 | 66 | 70 |
| Impact strength (g) (dart drop) ** | 1433 | 280 | 970 | 1433 | 1287 | 726 |
| Tear resistance MD/TD (N) | 6/6 | 5/9 | 14/22 | 7/10 | 14/21 | 16/27 |
| Tensile strength MD/TD (MPa) | 35/36 | 24/23 | 29/27 | 31/35 | 37/37 | 40/36 |
| Elongation at break MD/TD (%) | 790/850 | 640/810 | 1310/12 70 | 790/870 | 850/950 | 870/950 |
| IR trans. Glossy side (B) (%) | 47 | 72 | 75 | 47 | 59 | 72 |
| Diffuse light trans. glossy side (B) (%) | 90.2 | 88.1 | 83.3 | 87.3 | 85.6 | 84.5 |
| Diffuse light trans. mate side (A) (%) | | | | 87.5 | 85.6 | 84.8 |
| Direct light trans. glossy side (B) (%) (0°/45°) | 93.9/93. 1 | 92.6/90. 7 | 94.6/86. 5 | 95.3/90. 4 | 94.2/89. 0 | 94.2/87. 9 |
| Direct light trans. matt side (A) (%) (0° / 45°) | | | | 95.3/92. 0 | 95.0/90. 6 | 94.4/89. 2 |

| | | | | | | |
|---|---|---|---|---|---|---|
| ** The Impact strength of the examples COEX1-COEX3 and comparative examples EVA and LDPE1 was measured according to ISO 7765 B and the impact strength of LLDPE1 according to ISO 7765 A (lower hight). | | | | | | |

These results again prove the superior balance of properties for the three-layer structure in accordance with the present invention.

## Claims

1. A multilayer film which comprises at least two layers (A) and (B), wherein
- layer (A) comprises a multimodal linear low density polyethylene (LLDPE) composition with molecular weight distribution MWD (Mw/Mn) of 8 or more, and
- layer (B) comprises a polymer composition selected from a group comprising a low density polyethylene (LDPE) composition, a copolymer of ethylene with one or more of comonomers selected from vinyl acetate and acrylate, linear low density polyethylene (LLDPE) composition with a Mw/Mn of less than 8 or a polypropylene polymer said film having a haze of at least 40%.

2. A multilayer film as claimed in claim 1 wherein layer (B) comprises a polymer composition which has a gloss value of 60% or more, when determined according to ASTM D 2457 measured at angle 60° using a blown film sample consisting of said polymer composition and having a film thickness of 150 µm.

3. A multilayer film according to claim 1 or 2, which comprises, in the given layer order:
- layer (A) which comprises a multimodal LLDPE composition with MWD of at least 8,
- optional layer (A₁) which comprises LLDPE composition,
- optional layer (B₁) which comprises a polymer composition as defined for layer (B) in claim 1, and
- layer (B) which comprises a polymer composition as defined for layer (B) in claim 1.

4. A multilayer film according to claim 3, wherein the optional layer (A₁) comprises the same multimodal LLDPE composition as layer (A).

5. A multilayer film according to any preceding claim, wherein multimodal LLDPE composition has one or more, preferably all, of the following properties:
- a MWD of 10-25,
- a MFR₂ of 0.1 to 5 g/10 min, when measured according to ISO 1133 at 190°C at loads of 2.16,
- a density of 905-940 kg/m³, preferably 915-935 kg/m³, or
- FRR_{21/2} of > 15.

6. A multilayer film according to any preceding claim, wherein LLDPE composition is a multimodal LLDPE composition, preferably obtainable by polymerization using a Ziegler Natta catalyst (znLLDPE), and comprising
(i) a lower weight average molecular weight (LMW) component of ethylene homo or copolymer, preferably copolymer, and
(ii) a higher weight average molecular weight (HMW) component of ethylene copolymer.

7. A multilayer film according to any preceding claim, wherein polymer composition of layer (B) and of the optional layer (B₁) are selected from LDPE, ethylene methyl acrylate (EMA), ethylene ethyl acrylate (EEA), ethylene butyl acrylate (EBA), ethylene vinyl acetate (EVA) or any mixture thereof, preferably LDPE or EVA.

8. A multilayer film according to any preceding claim comprising, preferably consisting of, in the given layer order:
- layer (A) as defined in any as defined in any preceding claim;
- optional layer (A₁) which comprises LLDPE composition,
- optional layer (B₁) which comprises a polymer composition selected from a group comprising LDPE, EMA, EEA, EBA or EVA, and
- layer (B) which comprises a polymer composition selected from a group comprising LDPE, EMA, EEA, EBA or EVA.

9. A multilayer film according to any preceding claim, wherein the film is selected from one of the below layer structures in the given layer order:
- (A)/(B);
- (A)/(A₁)/(B);
- (A)/(B₁)/(B);
- 5-layer film, wherein (A) and (B) are the outermost layers and the three core layers are selected from (A₁) and (B₁), in any order,
and wherein layers (A), (B), (A₁) and (B₁) are as defined in any preceding claim.

10. A multilayer film according to any preceding claim, wherein layer (A) consists of a multimodal znLLDPE; optional layer (A₁) consist of a multimodal LLDPE, layer (B) consists of LDPE, EVA, EMA, EEA or EBA, preferably LDPE or EVA; optional layer (B₁) consists of LDPE, EVA, EMA, EEA or EBA, preferably LDPE or EVA.

11. A multilayer film according to any preceding claim, wherein optional layer (A₁) and layer (A) comprise, preferably consist of, the same multimodal znLLDPE composition.

12. A multilayer film according to any preceding claim, wherein optional layer (B₁) and layer (B) comprise same or different polymer composition, preferably the same polymer composition.

13. A multilayer film according to any preceding claim having an overall film thickness of from 50 to 400 µm.

14. Use of a multilayer film according to any preceding claim in agriculture, preferably as a greenhouse or tunnel coverage, or in mulching.

15. An article comprising the multilayer film of any preceding claim 1-13, wherein said multilayer film has a surface area of at least 10 m².

16. A construction for agricultural use comprising a rigid framework for defining and retaining the shape of the construction and a coverage covering the framework and being supported by said framework, wherein said coverage comprises the multilayer film according to any preceding claim 1-13.

17. The construction of claim 16, which is a greenhouse or tunnel, wherein the layer (A) side of the multilayer film in said coverage is arranged to be the outer side of the greenhouse or tunnel for facing towards a natural light source, such as a direct sunlight.

## Patentansprüche

1. Mehrschichtige Folie, die mindestens zwei Schichten (A) und (B) umfasst, wobei
- die Schicht (A) eine Zusammensetzung eines multimodalen, linearen Polyethylens mit niederer Dichte (LLDPE) mit einer Molekulargewichtsverteilung MWD (Mw/Mn) von 8 oder mehr umfasst, und
- die Schicht (B) eine Polymerzusammensetzung umfasst, die aus der Gruppe ausgewählt ist, umfassend eine Zusammensetzung eines Polyethylens mit niederer Dichte (LDPE), ein Copolymer aus Ethylen mit einem oder mehreren Comonomeren, ausgewählt aus Vinylacetat und Acrylat, eine Zusammensetzung eines linearen Polyethylens mit niedriger Dichte (LLDPE) mit einer Mw/Mn von weniger als 8 oder ein Polypropylenpolymer, wobei die Folie eine Trübung von mindestens 40 % aufweist.

2. Mehrschichtige Folie nach Anspruch 1, wobei die Schicht (B) eine Polymerzusammensetzung umfasst, die einen Glanzwert von 60 % oder mehr aufweist, wenn dieser gemäß dem ASTM D 2457 bei einem Winkel von 60° gemessen wird, wobei eine geblasene Folienprobe verwendet wird, die aus der Polymerzusammensetzung besteht und eine Foliendicke von 150 µm hat.

3. Mehrschichtige Folie nach Anspruch 1 oder 2, die in der angegebenen Schichtreihenfolge das Folgende aufweist:
- Schicht (A), die eine multimodale LLDPE-Zusammensetzung mit einer MWD von mindestens 8 umfasst,
- optionale Schicht (A₁), die LLDPE-Zusammensetzung umfasst,
- optionale Schicht (B₁), die eine Polymerzusammensetzung, wie sie für die Schicht (B) in Anspruch 1 definiert ist, umfasst, und
- Schicht (B), die eine Polymerzusammensetzung, wie sie für die Schicht (B) in Anspruch 1 definiert ist, umfasst.

4. Mehrschichtige Folie nach Anspruch 3, wobei die optionale Schicht (A₁) dieselbe multimodale LLDPE-Zusammensetzung wie die Schicht (A) umfasst.

5. Mehrschichtige Folie nach einem der vorhergehenden Ansprüche, wobei die multimodale LLDPE-Zusammensetzung eine oder mehrere, vorzugsweise alle, der folgenden Eigenschaften aufweist:
- eine MWD von 10-25,
- einen MFR₂ von 0,1 bis 5 g/10 min, wenn dieser gemäß dem ISO 1133 bei 190 °C und Lasten von 2,16 gemessen wird,
- eine Dichte von 905-940 kg/m³, vorzugsweise 915-935 kg/m³, oder
- ein FRR_{21/2} von >15.

6. Mehrschichtige Folie nach einem der vorhergehenden Ansprüche, wobei LLDPE-Zusammensetzung eine multimodale LLDPE-Zusammensetzung ist, die vorzugsweise durch Polymerisation unter Verwendung eines Ziegler-Natta-Katalysators erhältlich ist (znLLDPE), und
(i) eine Komponente aus Ethylenhomo- oder -copolymer, vorzugsweise -copolymer, mit einem niedrigeren Gewichtsmittel des Molekulargewichts (LMW) und
(ii) eine Komponente aus Ethylencopolymer mit einem höheren Gewichtsmittel des Molekulargewichts (HMW)
umfasst.

7. Mehrschichtige Folie nach einem der vorhergehenden Ansprüche, wobei die Polymerzusammensetzung der Schicht (B) und der optionalen Schicht (B₁) aus LLDPE, Ethylenmethylacrylat (EMA), Ethylenethylacrylat (EEA), Ethylenbuthylacrylat (EBA), Ethylenvinylacetat (EVA) oder irgendeiner Mischung davon, vorzugsweise aus LDPE oder EVA, ausgewählt ist.

8. Mehrschichtige Folie nach einem der vorhergehenden Ansprüche, die in der angegebenen Schichtreihenfolge das Folgende umfasst, vorzugsweise aus dem Folgenden besteht:
- Schicht (A), wie sie in einem der vorhergehenden Ansprüche definiert ist;
- optionale Schicht (A₁), die LLDPE-Zusammensetzung umfasst,
- optionale Schicht (B₁), die eine Polymerzusammensetzung umfasst, die aus einer Gruppe ausgewählt ist, umfassend LDPE, EMA, EEA, EBA oder EVA, und
- Schicht (B), die eine Polymerzusammensetzung umfasst, die aus einer Gruppe ausgewählt ist, umfassend LDPE, EMA, EEA, EBA oder EVA.

9. Mehrschichtige Folie nach einem der vorhergehenden Ansprüche, wobei die Folie aus einer von den nachstehenden Schichtstrukturen in der angegebenen Schichtreihenfolge ausgewählt ist:
- (A)/(B);
- (A)/(A₁)/(B);
- (A)/(B₁)/(B);
- 5-schichtige Folie, wobei (A) und (B) die äußersten Schichten sind und die drei Kernschichten aus (A₁) und (B₁) in irgendeiner Reihenfolge ausgewählt sind,
und wobei die Schichten (A), (B), (A₁) und (B₁) wie in irgendeinem der vorhergehenden Ansprüche definiert sind.

10. Mehrschichtige Folie nach einem der vorhergehenden Ansprüche, wobei die Schicht (A) aus einem multimodalen znLLDPE besteht; die optionale Schicht (A₁) aus einem multimodalen LLDPE besteht, die Schicht (B) aus LDPE, EVA, EMA, EEA oder EBA, vorzugsweise aus LDPE oder EVA, besteht; und die optionale Schicht (B₁) aus LDPE, EVA, EMA, EEA oder EBA, vorzugsweise aus LDPE oder EVA besteht.

11. Mehrschichtige Folie nach einem der vorhergehenden Ansprüche, wobei die optionale Schicht (A₁) und die Schicht (A) dieselbe multimodale znLLDPE-Zusammensetzung umfassen, vorzugsweise aus dieser bestehen.

12. Mehrschichtige Folie nach einem der vorhergehenden Ansprüche, wobei die optionale Schicht (B₁) und die Schicht (B) dieselbe oder unterschiedliche Polymerzusammensetzungen umfassen, vorzugsweise dieselbe Polymerzusammensetzung umfassen.

13. Mehrschichtige Folie nach einem der vorhergehenden Ansprüche, die eine Gesamtfoliendicke von 50 bis 400 µm aufweist.

14. Verwendung einer mehrschichtigen Folie nach einem der vorhergehenden Ansprüche in der Agrikultur, vorzugsweise einem Gewächshaus oder einer Tunnelabdeckung, oder beim Mulchen.

15. Artikel, umfassend die mehrschichtige Folie nach einem der vorhergehenden Ansprüche 1-13, wobei die mehrschichtige Folie eine Oberfläche von mindestens 10m² aufweist.

16. Konstruktion zur Agrikulturverwendung, umfassend ein starres Gerüst, um die Form der Konstruktion zu definieren und zu bewahren, und eine Abdeckung, die das Gerüst abdeckt und von dem Gerüst gestützt wird, wobei die Abdeckung die mehrschichtige Folie nach einem der vorhergehenden Ansprüche 1-13 umfasst.

17. Konstruktion nach Anspruch 16, die ein Gewächshaus oder Tunnel ist, wobei die Schicht (A)-Seite der mehrschichtigen Folie in der Abdeckung so angeordnet ist, dass sie die äußere Seite des Gewächshauses oder Tunnels ist, um einer natürlichen Lichtquelle zugewandt zu sein, wie zum Beispiel direktem Sonnenlicht.

## Revendications

1. Film multicouche comprenant au moins deux couches (A) et (B), dans lequel
- la couche (A) comprend une composition de polyéthylène linéaire à faible densité (LLDPE) multimodale avec une distribution de poids moléculaire MWD (Mw/Mn) de 8 ou plus, et
- la couche (B) comprend une composition de polymère sélectionnée parmi un groupe comprenant une composition de polyéthylène à faible densité (LDPE), un copolymère d'éthylène avec un ou plusieurs comonomères sélectionnés parmi l'acétate et l'acrylate de vinyle, une composition de polyéthylène linéaire à faible densité (LLDPE) avec une Mw/Mn de moins de 8 ou un polymère de polypropylène dudit film ayant un trouble d'au moins 40 %.

2. Film multicouche selon la revendication 1 dans lequel la couche (B) comprend une composition de polymère qui a une valeur de brillance de 60 % ou plus, lorsque déterminée en conformité avec ASTM D 2457 mesurée à un angle de 60° au moyen d'un échantillon de film soufflé constitué de ladite composition de polymère et ayant une épaisseur de film de 150 µm.

3. Film multicouche selon les revendications 1 ou 2, qui comprend, dans l'ordre de couches donné :
- une couche (A) qui comprend une composition LLDPE multimodale avec une MWD d'au moins 8,
- une couche optionnelle (A₁) qui comprend la composition LLDPE,
- une couche optionnelle (B₁) qui comprend une composition de polymère telle que définie pour la couche (B) dans la revendication 1, et
- une couche (B) qui comprend une composition de polymère telle que définie pour la couche (B) dans la revendication 1.

4. Film multicouche selon la revendication 3, dans lequel la couche optionnelle (A₁) comprend la même composition LLDPE multimodale que la couche (A).

5. Film multicouche selon l'une quelconque des revendications précédentes, dans lequel la composition LLDPE multimodale a une ou plusieurs, de préférence la totalité, des propriétés suivantes :
- une MWD de 10-25,
- un MFR₂ de 0,1 à 5 g/10min, lorsque mesuré en conformité avec ISO 1133 à 190 °C à des charges de 2,16,
- une densité de 905-940 kg/m³, de préférence 915-935 kg/m³, ou
- FRR _{21/2} de > 15.

6. Film multicouche selon l'une quelconque des revendications précédentes, dans lequel la composition LLDPE est une composition LLDPE multimodale, pouvant être obtenue de préférence par polymérisation au moyen d'un catalyseur Ziegler-Natta (znLLDPE), et comprenant
(i) un composant de poids moléculaire moyen inférieur (LMW) d'homo ou copolymère d'éthylène, de préférence de copolymère, et
(ii) un composant de poids moléculaire moyen supérieur (HMW) de copolymère d'éthylène.

7. Film multicouche selon l'une quelconque des revendications précédentes, dans lequel les compositions de polymère de la couche (B) et de la couche optionnelle (B₁) sont sélectionnées parmi LDPE, éthylène-acrylate de méthyle (EMA), éthylène-acrylate d'éthyle (EEA), éthylène-acrylate de butyle (EBA), éthylène-acétate de vinyle (EVA) ou l'un quelconque de leurs mélanges, de préférence LDPE ou EVA.

8. Film multicouche selon l'une quelconque des revendications précédentes comprenant, de préférence constitué de, dans l'ordre de couches donné :
- une couche (A) telle que définie dans l'une quelconque des revendications précédentes ;
- une couche optionnelle (A₁) qui comprend la composition LLDPE,
- une couche optionnelle (B₁) qui comprend une composition de polymère sélectionnée parmi un groupe comprenant LDPE, EMA, EEA, EBA ou EVA, et
- une couche (B) qui comprend une composition de polymère sélectionnée parmi un groupe comprenant LDPE, EMA, EEA, EBA ou EVA.

9. Film multicouche selon l'une quelconque des revendications précédentes, dans lequel le film est sélectionné parmi une des structures de couches ci-après dans l'ordre de couches donné :
- (A)/(B) ;
- (A)/(A₁)/(B) ;
- (A)/(B₁)/(B) ;
- un film à 5 couches, dans lequel (A) et (B) sont les couches les plus extérieures et les trois couches centrales sont sélectionnés parmi (A₁), et (B₁), dans n'importe quel ordre,
et dans lequel les couches (A), (B), (A₁) et (B₁) sont telles que définies dans l'une quelconque des revendications précédentes.

10. Film multicouche selon l'une quelconque des revendications précédentes, dans lequel la couche (A) est constituée d'une znLLDPE multimodale ; la couche optionnelle (A₁), est constituée d'une LLDPE multimodale, la couche (B) est constituée de LDPE, EVA, EMA, EEA ou EBA, de préférence LDPE ou EVA ; la couche optionnelle (B₁) est constituée de LDPE, EVA, EMA, EEA ou EBA, de préférence LDPE ou EVA.

11. Film multicouche selon l'une quelconque des revendications précédentes, dans lequel la couche optionnelle (A₁) et la couche (A) comprennent, de préférence sont constituées de, la même composition ZnLLDPE multimodale.

12. Film multicouche selon l'une quelconque des revendications précédentes, dans lequel la couche optionnelle (B₁) et la couche (B) comprennent la même ou une composition de polymère différente, de préférence la même composition de polymère.

13. Film multicouche selon l'une quelconque des revendications précédentes ayant une épaisseur totale de film de 50 à 400 µm.

14. Utilisation d'un film multicouche selon l'une quelconque des revendications précédentes en agriculture, de préférence sous forme de couverture de serre ou tunnel, ou dans le paillage.

15. Article comprenant le film multicouche de l'une quelconque des revendications précédentes 1-13,
dans lequel ledit film multicouche a une superficie d'au moins 10 m².

16. Construction pour un usage agricole comprenant un cadre rigide pour définir et retenir la forme de la construction et une couverture couvrant le cadre et étant supportée par ledit cadre, dans laquelle ladite couverture comprend le film multicouche selon l'une quelconque des revendications 1-13.

17. Construction selon la revendication 16, qui est une serre ou un tunnel, dans laquelle le côté de la couche (A) du film multicouche de ladite couverture est agencé pour être le côté extérieur de la serre ou du tunnel pour être orienté vers une source de lumière naturelle, comme la lumière directe du soleil.
